# EUROPEAN PATENT APPLICATION

(11) **EP 3 001 657 A1**
(43) Date of publication of application: **30.03.2016**
(21) Application number: 13888836.7
(22) Date of filing: 01.07.2013
(51) Int. Cl.: H04M 3/42

(54) **VOICE INFORMATION PROCESSING METHOD, APPARATUS AND SYSTEM**

(71) Applicant: Huawei Technologies Co., Ltd., Longgang District Shenzhen, Guangdong 518129 (CN)
(72) Inventor: MAO, Guofeng, Shenzhen Guangdong 518129 (CN); FU, Xiaobao, Shenzhen Guangdong 518129 (CN)
(74) Representative: Körber, Martin Hans
(86) International application number: PCT/CN2013/078610
(87) International publication number: WO 2015/000119

(57) **Abstract**

Embodiments of the present invention relate to a voice information processing method, apparatus, and system. The method includes: sending, by a call center, a call request to a terminal, and establishing a voice session with the terminal or establishing a voice session by using the terminal with a voice mailbox system that provides a voice mailbox service for the terminal; when voice information sent by the terminal or the voice mailbox system is received, detecting whether the voice information is voice message information recorded by a user; and if it is detected that the voice information is the voice message information recorded by the user, adjusting, according to reference information when the voice message information includes the reference information used to call the user, a manner of calling the user.

## Description

### TECHNICAL FIELD

The present invention relates to the field of communications technologies, and in particular, to a voice information processing method, apparatus, and system.

### BACKGROUND

A call center is a call system that implements centralized user services by using modem communications technologies. The call center mostly uses a computer and telephony integrator (Computer and Telephony Integrator, CTI for short) technology, where the CTI technology integrates multiple communications media, such as telephone, fax, mail, and Voice over Internet Protocol (Voice over Internet Protocol, VoIP for short), and becomes a platform that achieves multiple purposes such as customer services, sales, and marketing promotion.

Currently, the call center further provides a proactive outbound call function. Large enterprises provide services and process services for their own customers by using the call center. In addition, the call center may further make calls targeted at a specific customer group by using the outbound call function, and then help the enterprises achieve a specific marketing goal. However, when the call center starts the outbound call function, the call center often encounters a case in which a terminal automatically answers a call or transfers a call to a voice mailbox.

In the prior art, the foregoing case is processed as follows: the call center sends an outbound call request to the terminal, and calls a user; if automatic call answering or call transferring to a voice mailbox system is set on the terminal of the user, the terminal or the voice mailbox system plays, to the call center, voice message information (for example: "I am not at home right now. Please call 138xxxxx") recorded by the user; when an outbound call center detects that it is voice message information recorded by the user, the call center disconnects the call or transfers the call to a manual agent; and the call center records a result of the call this time as user unconnected.

However, in the prior art, the following disadvantages are also found in the process in which the call center processes automatic call answering or call transferring to the voice mailbox system performed by the terminal: when the call center makes a call to the same user again, if the user keeps using the terminal to automatically answer calls or transfer calls to the voice mailbox system, the user cannot be put through all the time, thereby leading to low call efficiency and a waste of call resources.

### SUMMARY

Embodiments of the present invention provide a voice information processing method, apparatus, and system to solve problems of low call efficiency of a call center and a waste of call resources in the prior art that arise in a case in which a user keeps using a terminal to automatically answer calls or transfer calls to a voice mailbox system, and the call center cannot put through the user all the time.

According to a first aspect, an embodiment of the present invention provides a voice information processing method, where the method includes:
sending, by a call center, a call request to a terminal, and establishing a voice session with the terminal or establishing a voice session by using the terminal with a voice mailbox system that provides a voice mailbox service for the terminal;
when voice information sent by the terminal or the voice mailbox system is received, detecting whether the voice information is voice message information recorded by a user; and
if it is detected that the voice information is the voice message information recorded by the user, adjusting, according to reference information when the voice message information includes the reference information used to call the user, a manner of calling the user.

In a first possible implementation manner, the adjusting, according to reference information when the voice message information includes the reference information used to call the user, a manner of calling the user specifically includes:
when the voice message information includes phone number information, calling the user again according to the phone number information; or
when the voice message information includes time information, calling the user again according to the time information; or
when the voice message information includes information used to indicate that the terminal is unreachable, skipping calling the user by using the terminal; or
when the voice message information includes information about a request for message leaving, playing, by the call center, message information recorded by the call center to the terminal or the voice mailbox system when calling the same user again.

In a second possible implementation manner, the method further includes:
when the voice information is the voice message information recorded by the user, and it is determined that receiving the voice message information is completed, terminating the voice session established with the terminal, or terminating the voice session that is established with the voice mailbox system by using the terminal.

According to a second aspect, an embodiment of the present invention provides a voice information processing apparatus, where the apparatus includes:
an establishing unit, configured to send a call request to a terminal, and establish a voice session with the terminal or establish a voice session by using the terminal with a voice mailbox system that provides a voice mailbox service for the terminal;
a detecting unit, configured to: when voice message information sent by the terminal or the voice mailbox system is received, detect whether the voice information is voice message information recorded by a user, and is configured to transmit a detection result to an adjusting unit; and
the adjusting unit, configured to: receive the detection result from the detecting unit; and if the detection result indicates that the voice information is the voice message information recorded by the user, adjust, according to reference information when the voice message information includes the reference information used to call the user, a manner of calling the user.

In a first possible implementation manner, the adjusting unit is specifically configured to:
when the voice message information includes phone number information, call the user again according to the phone number information; or
when the voice message information includes time information, call the user again according to the time information; or
when the voice message information includes information used to indicate that the terminal is unreachable, skip calling the user by using the terminal; or
when the voice message information includes information about a request for message leaving, play, by a call center, message information recorded by the call center to the terminal or the voice mailbox system when calling the same user again.

In a second possible implementation manner, the apparatus further includes:
a terminating unit, configured to: when the voice information is the voice message information recorded by the user, and it is determined that receiving the voice message information is completed, terminate the voice session established with the terminal, or terminate the voice session that is established with the voice mailbox system by using the terminal.

According to a third aspect, an embodiment of the present invention provides a voice information processing apparatus, where the apparatus includes:
a network interface;
a processor; and
a memory;
where the network interface is configured to communicate with a terminal; and
the memory is configured to store an application program, where the application program includes an instruction used to enable the processor to execute the following processes:
   sending a call request to the terminal by using the network interface, and establishing a voice session with the terminal or establishing a voice session by using the terminal with a voice mailbox system that provides a voice mailbox service for the terminal;
   when voice information sent by the terminal or the voice mailbox system is received by using the network interface, detecting whether the voice information is voice message information recorded by a user; and
   if it is detected that the voice information is the voice message information recorded by the user, adjusting, according to reference information when the voice message information includes the reference information used to call the user, a manner of calling the user.

In a first possible implementation manner, the application program may be used to enable the processor to execute the instruction for adjusting, according to the reference information when the voice message information includes the reference information used to call the user, the manner of calling the user, where the instruction is specifically an instruction for executing the following processes:
when the voice message information includes phone number information, calling the user again according to the phone number information; or
when the voice message information includes time information, calling the user again according to the time information; or
when the voice message information includes information used to indicate that the terminal is unreachable, skipping calling the user by using the terminal; or
when the voice message information includes information about a request for message leaving, playing message information recorded by the apparatus to the terminal or the voice mailbox system when calling the same user again.

In a second possible implementation manner, the application program further includes an instruction that may be used to enable the processor to execute the following process:
when the voice information is the voice message information recorded by the user, and it is determined that receiving the voice message information is completed, terminating the voice session established with the terminal, or terminating the voice session that is established with the voice mailbox system by using the terminal.

According to a fourth aspect, an embodiment of the present invention provides a voice information processing system, where the system includes the voice information processing apparatus according to the second aspect of the present invention, or
the voice information processing apparatus according to the third aspect of the present invention.

Therefore, according to the voice information processing method, apparatus, and system provided in the embodiments of the present invention, when the call center detects that the voice information sent by the terminal or the voice mailbox system is the voice message information recorded by the user, the call center adjusts, according to the reference information that is included in the voice message information and used to call the user, the manner of calling the user. This increases a success rate of putting through the user, and to some extent avoids a problem that the call center cannot put through the user all the time in the prior art, where the problem arises in a case in which the user keeps using the terminal to automatically answer calls or transfer calls to the voice mailbox system and arises because the call center cannot adaptively adjust the manner of calling the user according to the voice message information of the user. Therefore, call efficiency is improved, and a call resource is saved.

### BRIEF DESCRIPTION OF DRAWINGS

FIG. 1 is a flowchart of a voice information processing method according to Embodiment 1 of the present invention;
FIG. 2 is a signaling diagram of a voice information processing method according to an embodiment of the present invention;
FIG. 3 is a signaling diagram of another voice information processing method according to an embodiment of the present invention;
FIG. 4 is a structural diagram of a voice information processing apparatus according to Embodiment 2 of the present invention;
FIG. 5 is a structural diagram of another voice information processing apparatus according to Embodiment 2 of the present invention;
FIG. 6 is a structural diagram of hardware of a voice information processing apparatus according to Embodiment 3 of the present invention; and
FIG. 7 is a schematic diagram of a voice information processing system according to Embodiment 4 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

For understanding of the present invention, the following further describes the embodiments of the present invention in detail with reference to the accompanying drawings. The embodiments are not intended to limit the protection scope of the present invention.

### Embodiment 1

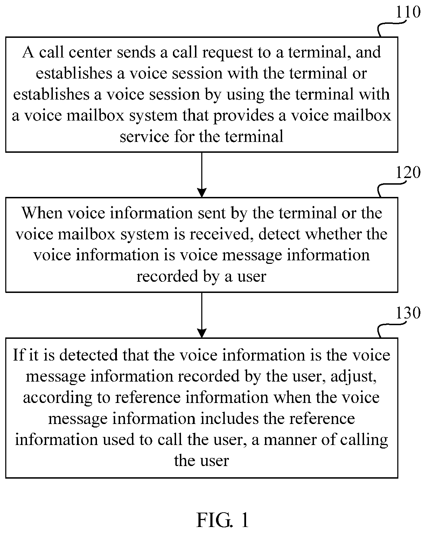

The following uses FIG. 1 as an example to describe in detail a voice information processing method provided in Embodiment 1 of the present invention. FIG. 1 is a flowchart of the voice information processing method according to Embodiment 1 of the present invention. In the embodiment of the present invention, an execution body is a call center. As shown in FIG. 1, the embodiment specifically includes the following steps:
Step 110: The call center sends a call request to a terminal, and establishes a voice session with the terminal or establishes a voice session by using the terminal with a voice mailbox system that provides a voice mailbox service for the terminal.

Specifically, the call center starts an outbound call system according to a current outbound call policy of the call center, selects a user, dials a phone number of a terminal of the user, and sends a call request to the terminal.

Further, the call request sent by the call center may be forwarded by a public switched telephone network (Public Switched Telephone Network, PSTN) and reach the terminal, or the call may be forwarded by a Global System for Mobile Communications (Global System of Mobilecommunication, GSM for short) and reach the terminal, or the call may be forwarded by a Code Division Multiple Access system (Code Division Multiple Access, CDMA for short) and reach the terminal.

Further, in an implementation manner, the terminal is specifically a fixed-line phone (namely a landline telephone) of the user, and the user sets the terminal as that the terminal starts automatic call answering when the user cannot reply to a call and there is an incoming call. After receiving the call request sent by the call center, the terminal sends a call reply to the call center, and then establishes a voice session with the call center.

In another implementation manner, when the terminal is specifically a mobile phone (namely, a cell phone) of the user, the user sets the terminal as that the terminal transfers a call to a voice mailbox system when the user cannot reply to a call and there is an outbound call, where the voice mailbox system provides a voice mailbox service for the terminal. After receiving the call request sent by the call center, the terminal transfers the call request to the voice mailbox system. The voice mailbox system sends a call reply to the call center by using the terminal, and then establishes a voice session with the call center.

Step 120: When voice information sent by the terminal or the voice mailbox system is received, detect whether the voice information is voice message information recorded by a user.

Specifically, after the terminal or the voice mailbox system receives the call request sent by the call center, and establishes the voice session with the call center, the terminal or the voice mailbox system sends the voice information to the call center. When receiving the voice information sent by the terminal or the voice mailbox system, the call center detects whether the voice information is the voice message information recorded by the user.

It can be understood that the detecting, by the call center, whether the received voice information is a voice message information recorded by a user may specifically be detecting, according to a volume, a tone, a speech rate, and rhythm, whether the voice information is the voice message information recorded by the user.

Step 130: If it is detected that the voice information is the voice message information recorded by the user, adjust, according to reference information when the voice message information includes the reference information used to call the user, a manner of calling the user.

Specifically, if the call center detects that the voice information is the voice message information recorded by the user, when the voice message information includes the reference information used to call the same user, the call center adjusts, according to the reference information, the manner of calling the same user, thereby increasing a success rate of putting through the user, improving call efficiency, and saving a call resource.

Further, the adjusting, according to reference information when the voice message includes the reference information used to call the user, a manner of calling the user specifically includes:
In the embodiment of the present invention, the reference information that is included in the voice message information and used to call the user specifically includes: phone number information, time information, information indicating that the terminal is unreachable, and information about a request for message leaving.

In a first example, when the voice message information includes the phone number information, that is, the reference information is specifically the phone number information, the call center calls the same user again according to the phone number information.

For example, the voice message information is specifically: "I am not at home right now. Please call 138xxxxxxx." The call center calls the same user again according to the phone number information "138xxxxxxx".

In a second example, when the voice message information includes the time information, that is, the reference information is specifically the time information, the call center calls the same user again according to the time information.

For example, the voice message information is specifically: "I am on a business trip right now, and will be back on x (month) x (day), 20xx". The call center calls the same user again according to the time information "x (month) x (day), 20xx".

In a third example, when the voice message information includes the information indicating that the terminal is unreachable, that is, the reference information is specifically the information used to indicate that the terminal is unreachable, the call center does not call the user by using the terminal any more.

For example, the voice message information is specifically: "The number you dial is out of service." The call center no longer calls the same user by using the terminal according to the information indicating that the terminal is unreachable, namely, "The number is out of service."

In a fourth example, when the voice message information includes the information about a request for message leaving, that is, the reference information is specifically the information about a request for message leaving, the call center plays message information recorded by the call center to the terminal or the voice mailbox system when calling the same user again.

For example, the voice message information is specifically: "I am not at home. Please leave a message." When calling the same user again, the call center plays, according to the information about a request for message leaving, recorded message information (For example, if the call center serves an insurance company, the message information is specifically: This is a call from xx insurance company. If you are interested in the insurance business, please call 8xxx xxxx, and we are looking forward to your reply.) to the terminal or the voice mailbox system.

If the voice message information does not include the reference information, the call center transfers the established voice session to an agent.

For example, the voice message information is specifically: "I am not available to answer the call right now." It may be understood that the call center cannot ascertain a specific meaning of the user according to the voice message information, and therefore, when the call center calls the same user again and still does not ascertain the specific meaning of the user, the call center transfers the established voice session to the agent. The agent performs corresponding processing according to an actual condition.

It should be noted that, in the embodiment of the present invention, in an implementation manner, the call center may directly extract, from the voice message information, the reference information used to call the user, and adjust, according to the reference information, the manner of calling the user; in another implementation manner, the call terminal may first convert the voice message information to text message information, extract the reference information from the text message information, and then adjust, according to the reference information, the manner of calling the user.

Specifically, when the call center detects that the voice information is the voice message information recorded by the user, the call center converts the voice message information to corresponding text message information.

When the voice information is the voice message information recorded by the user, the call center starts an automatic speech recognition (Automatic Speech Recognition, ASR for short) mode. In the ASR mode, the voice message information is converted to the corresponding text message information.

It should be noted that the ASR is a technology that converts voice information of a human being to text information. A main process is as follows: A speech feature parameter is obtained in advance by means of analysis, and a speech template is produced and stored in a speech parameter library; to-be-recognized speech is analyzed in a manner the same as that in training, to obtain a speech parameter; and the speech parameter is compared with reference templates in a reference library one by one, and by using a determining method, a template that is closest to a speech feature is found, and a recognition result, namely text information, is obtained. It can be understood that, because the ASR is the prior art, details are not repeatedly described herein.

It should be noted that the call center may further update, according to the reference information, a call policy of the call center for calling the same user, and the call center calls the same user again according to an updated policy.

Specifically, when the voice message information includes the phone number information, the call center updates phone number information of the terminal stored in the call policy, and calls the same user again according to updated phone number information.

For example, the voice message information is specifically: "I am not at home right now. Please call 138xxxxxxx." The call center updates the stored phone number information of the terminal to "138xxxxxxx", and calls the same user again according to an updated phone number.

When the voice message information includes the time information, the call center updates time information, which is stored in the call policy, for calling the user, and calls the same user again according to updated time information.

For example, the voice message information is specifically: "I am on a business trip right now, and will be back on x (month) x (day), 20xx." The call center updates the stored time information for calling the user to "x (month) x (day), 20xx", and calls the same user again according to updated time.

When the voice message information includes the information used to indicate that the terminal is unreachable, the call center updates status information of the terminal stored in the call policy, and does not call the same user by using the terminal any more.

For example, the voice message information is specifically: "The number you dial is out of service." The call center updates the stored status information of the terminal to "The number is out of service". When the same user is called again, the phone number of the terminal is not used to call the same user any more, and a call is made by using another stored phone number of the user.

When the voice message information includes the information about a request for message leaving, the call center adds, to the call policy, message information recorded by the call center for the user. When calling the user again, the call center plays the message information to the terminal of the user or to the voice mailbox system by using the terminal.

For example, the voice message information is specifically: "I am not at home. Please leave a message." The call center adds, to the call policy, message information (For example, if the call center serves an insurance company, the message information is specifically: This is a call from xx insurance company. If you are interested in the insurance business, please call 8xxx xxxx, and we are looking forward to your reply.) recorded by the call center for the same user in advance. When calling the user again, the call center plays the message information to the terminal of the user or to the voice mailbox system.

Further, the call policy includes setting information, where the setting information may be used to store message information recorded by the call center in advance, and the call center may add message information to the setting information, and then update the call policy.

If the voice message information does not include the reference information, the call center may update processing information of the terminal stored in the call policy. When calling the same user again, the call center transfers the established voice session to the agent.

For example, the voice message information is specifically: "I am not available to answer the call right now." The call center updates the stored processing information of the terminal as "transferring to an agent for processing" (it may be understood that the call center cannot ascertain a specific meaning of the user according to the message text information, and therefore the call center updates the processing information of the terminal to transferring to the agent position for processing, and the agent performs processing according to an actual condition). When calling the same user again, the call center transfers the established voice session to the agent.

It can be understood that the call center includes multiple call policies for different users, and the call center invokes different call policies according to different called users.

Optionally, after the step 130 in the embodiment of the present invention, a step of terminating the established voice session and storing message text information by the call center is further included, and by performing the following step, the call efficiency of the call center is improved, and a call resource is saved.

When the voice information is the voice message information recorded by the user, and it is determined that receiving the voice message information is completed, the call center terminates the voice session established with the terminal, or terminates the voice session that is established with the voice mailbox system by using the terminal.

When the voice information is the voice message information recorded by the user, and the call center determines that receiving the voice message information is completed, the call center may terminate the voice session established with the terminal, or terminate the voice session that is established with the voice mailbox system by using the terminal, thereby improving the call efficiency of the call center, and saving a call resource.

The call center coverts the voice message information to corresponding text message information for storage.

Specifically, after terminating the voice session established with the terminal, or terminating the voice session that is established with the voice mailbox system by using the terminal, the call center may further convert the voice message information to the corresponding text message information for storage, for example, storage in a database of the call center.

It can be understood that the call center may store the text message information as a call result of the voice session.

Optionally, the step 120 in the embodiment of the present invention further includes another implementation manner, that is, when the voice information is not the voice message information recorded by the user (for example, the voice information is voice information of the user), it indicates that the call center successfully establishes a call with the user by using the terminal.

Therefore, according to the voice information processing method provided in the embodiment of the present invention, when the call center detects that the voice information sent by the terminal or the voice mailbox system is the voice message information recorded by the user, the call center adjusts, according to the reference information that is included in the voice message information and used to call the user, the manner of calling the user. This increases a success rate of putting through the user, and to some extent avoids a problem that the call center cannot put through the user all the time in the prior art, where the problem arises in a case in which the user keeps using the terminal to automatically answer calls or transfer calls to the voice mailbox system and arises because the call center cannot adaptively adjust the manner of calling the user according to the voice message information of the user. Therefore, call efficiency is improved, and a call resource is saved.

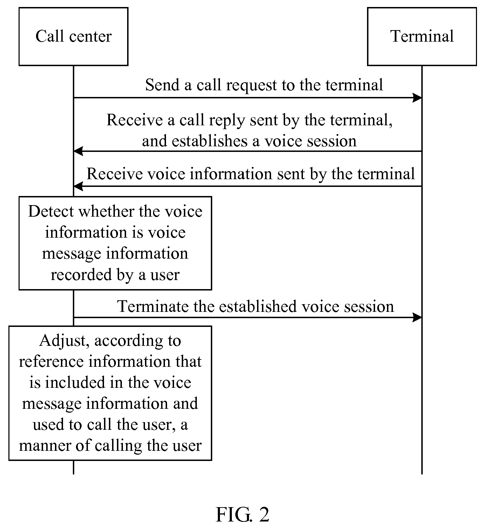

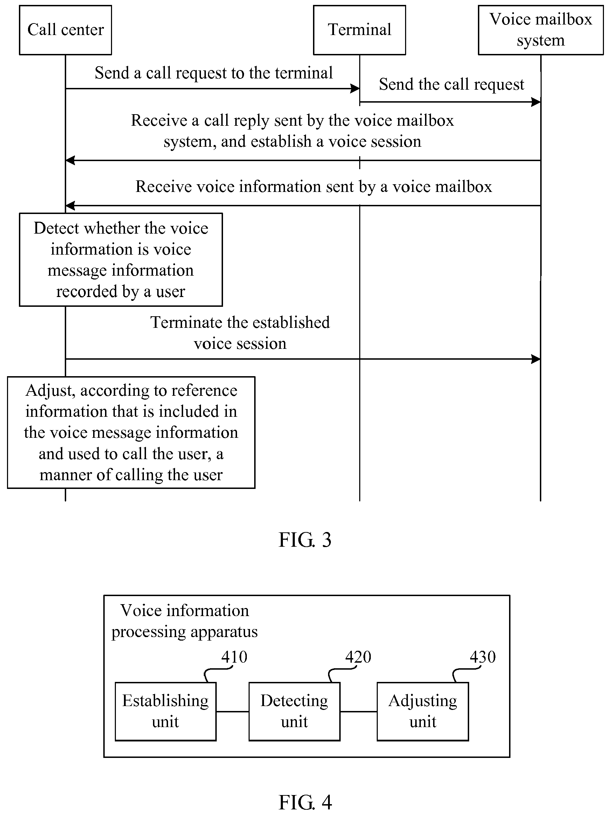

Further, FIG. 2 and FIG. 3 are signaling diagrams of a voice information processing method according to an embodiment of the present invention; the signaling diagram shown in FIG. 2 is a process of processing voice information by a call center and a terminal, and the signaling diagram shown in FIG. 3 is a process of processing voice information by a call center and a voice mailbox system by using a terminal. Both the voice information processing methods in FIG. 2 and FIG. 3 can be executed according to the process described in the foregoing embodiment, and details are not repeatedly described herein.

### Embodiment 2

All the methods described in the foregoing embodiment may implement a voice information processing method, and correspondingly, Embodiment 2 of the present invention further provides a voice information processing apparatus that is used to implement the voice information processing method in the foregoing embodiment. As shown in FIG. 4, the apparatus includes: an establishing unit 410, a detecting unit 420, and an adjusting unit 430, where:
the establishing unit 410 in the apparatus is configured to send a call request to a terminal, and establish a voice session with the terminal or establish a voice session by using the terminal with a voice mailbox system that provides a voice mailbox service for the terminal;
the detecting unit 420 is configured to: when voice information sent by the terminal or the voice mailbox system is received, detect whether the voice information is voice message information recorded by a user, and is configured to transmit a detection result to the adjusting unit; and
the adjusting unit 430 is configured to: receive the detection result from the detecting unit; and if the detection result indicates that the voice information is the voice message information recorded by the user, adjust, according to reference information when the voice message information includes reference information used to call the user, a manner of calling the user.

The adjusting unit 430 is specifically configured to: when the voice message information includes phone number information, call the user again according to the phone number information; or
when the voice message information includes time information, call the user again according to the time information; or
when the voice message information includes information used to indicate that the terminal is unreachable, skip calling the user by using the terminal; or
when the voice message information includes information about a request for message leaving, play, by a call center, message information recorded by the call center to the terminal or the voice mailbox system when calling the same user again.

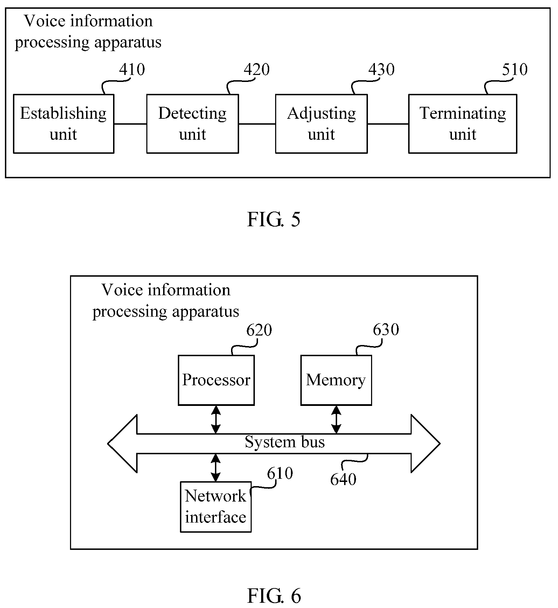

Further, as shown in FIG. 5, the apparatus further includes a terminating unit 510, configured to: when the voice information is the voice message information recorded by the user, and it is determined that receiving the voice message information is completed, terminate the voice session established with the terminal, or terminate the voice session that is established with the voice mailbox system by using the terminal.

Therefore, according to the voice information processing apparatus provided in the embodiment of the present invention, when the call center detects that the voice information sent by the terminal or the voice mailbox system is the voice message information recorded by the user, the call center adjusts, according to the reference information that is included in the voice message information and used to call the user, the manner of calling the user. This increases a success rate of putting through the user, and to some extent avoids a problem that the call center cannot put through the user all the time in the prior art, where the problem arises in a case in which the user keeps using the terminal to automatically answer calls or transfer calls to the voice mailbox system and arises because the call center cannot adaptively adjust the manner of calling the user according to the voice message information of the user. Therefore, call efficiency is improved, and a call resource is saved.

### Embodiment 3

In addition, the voice information processing apparatus provided in Embodiment 2 of the present invention may further use the following implementation manner to implement the voice information processing method in the foregoing embodiment of the present invention. As shown in FIG. 6, the voice information processing apparatus includes: a network interface 610, a processor 620, and a memory 630. A system bus 640 is configured to connect the network interface 610, the processor 620, and the memory 630.

The network interface 610 is configured to communicate with a terminal.

The memory 630 may be a permanent memory, for example, a hard disk drive and a flash memory. The memory 630 is configured to store an application program, where the application program includes an instruction that may be used to enable the processor 620 to execute the following processes:
sending a call request to the terminal by using the network interface, and establishing a voice session with the terminal or establishing a voice session by using the terminal with a voice mailbox system that provides a voice mailbox service for the terminal;
when voice information sent by the terminal or the voice mailbox system is received by using the network interface, detecting whether the voice information is voice message information recorded by a user; and
if it is detected that the voice information is the voice message information recorded by the user, adjusting, according to reference information when the voice message information includes the reference information used to call the user, a manner of calling the user.

Further, the application program stored in the memory 630 may be used to enable the processor 620 to execute the instruction for adjusting, according to the reference information when the voice message information includes the reference information used to call the user, the manner of calling the user, where the instruction is specifically an instruction for executing the following processes:
when the voice message information includes phone number information, calling the user again according to the phone number information; or
when the voice message information includes time information, calling the user again according to the time information; or
when the voice message information includes information used to indicate that the terminal is unreachable, skipping calling the user by using the terminal; or
when the voice message information includes information about a request for message leaving, playing message information recorded by the apparatus to the terminal or the voice mailbox system when calling the same user again.

Further, the application program stored in the memory 630 further includes an instruction that may be used to enable the processor 620 to execute the following process:
when the voice information is the voice message information recorded by the user, and it is determined that receiving the voice message information is completed, terminating the voice session established with the terminal, or terminating the voice session that is established with the voice mailbox system by using the terminal.

Therefore, according to the voice information processing apparatus provided in the embodiment of the present invention, when the call center detects that the voice information sent by the terminal or the voice mailbox system is the voice message information recorded by the user, the call center adjusts, according to the reference information that is included in the voice message information and used to call the user, the manner of calling the user. This increases a success rate of putting through the user, and to some extent avoids a problem that the call center cannot put through the user all the time in the prior art, where the problem arises in a case in which the user keeps using the terminal to automatically answer calls or transfer calls to the voice mailbox system and arises because the call center cannot adaptively adjust the manner of calling the user according to the voice message information of the user. Therefore, call efficiency is improved, and a call resource is saved.

### Embodiment 4

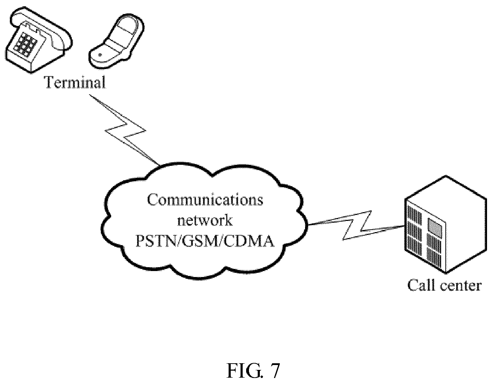

Correspondingly, Embodiment 4 of the present invention further provides a voice information processing system. As shown in FIG. 7, the system includes the voice information processing apparatus according to Embodiment 2 of the present invention; or
the system includes the voice information processing apparatus according to Embodiment 3 of the present invention.

Further, the system further includes a terminal and a corresponding communications network.

Therefore, according to the voice information processing apparatus provided in the embodiment of the present invention, when a call center detects that voice information sent by the terminal or a voice mailbox system is voice message information by a user, the call center adjusts, according to reference information that is included in the voice message information and used to call the user, a manner of calling the user. This increases a success rate of putting through the user, and to some extent avoids a problem that the call center cannot put through the user all the time in the prior art, where the problem arises in a case in which the user keeps using the terminal to automatically answer calls or transfer calls to the voice mailbox system and arises because the call center cannot adaptively adjust the manner of calling the user according to the voice message information of the user. Therefore, call efficiency is improved, and a call resource is saved.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

Steps of methods or algorithms described in the embodiments disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

In the foregoing specific implementation manners, the objective, technical solutions, and benefits of the present invention are further described in detail. It should be understood that the foregoing descriptions are merely specific implementation manners of the present invention, but are not intended to limit the protection scope of the present invention. Any modification, equivalent replacement, or improvement made without departing from the spirit and principle of the present invention should fall within the protection scope of the present invention.

## Claims

1. A voice information processing method, wherein the method comprises:
sending, by a call center, a call request to a terminal, and establishing a voice session with the terminal or establishing a voice session by using the terminal with a voice mailbox system that provides a voice mailbox service for the terminal;
when voice information sent by the terminal or the voice mailbox system is received, detecting whether the voice information is voice message information recorded by a user; and
if it is detected that the voice information is the voice message information recorded by the user, adjusting, according to reference information when the voice message information comprises the reference information used to call the user, a manner of calling the user.

2. The voice information processing method according to claim 1, wherein the adjusting, according to reference information when the voice message information comprises the reference information used to call the user, a manner of calling the user specifically comprises:
when the voice message information comprises phone number information, calling the user again according to the phone number information; or
when the voice message information comprises time information, calling the user again according to the time information; or
when the voice message information comprises information used to indicate that the terminal is unreachable, skipping calling the user by using the terminal; or
when the voice message information comprises information about a request for message leaving, playing, by the call center, message information recorded by the call center to the terminal or the voice mailbox system when calling the same user again.

3. The voice information processing method according to claim 1, wherein the method further comprises:
when the voice information is the voice message information recorded by the user, and it is determined that receiving the voice message information is completed, terminating the voice session established with the terminal, or terminating the voice session that is established with the voice mailbox system by using the terminal.

4. A voice information processing apparatus, wherein the apparatus comprises:
an establishing unit, configured to send a call request to a terminal, and establish a voice session with the terminal or establish a voice session by using the terminal with a voice mailbox system that provides a voice mailbox service for the terminal;
a detecting unit, configured to: when voice information sent by the terminal or the voice mailbox system is received, detect whether the voice information is voice message information recorded by a user, and is configured to transmit a detection result to an adjusting unit; and
the adjusting unit, configured to: receive the detection result from the detecting unit; and if the detection result indicates that the voice information is the voice message information recorded by the user, adjust, according to reference information when the voice message information comprises the reference information used to call the user, a manner of calling the user.

5. The voice information processing apparatus according to claim 4, wherein the adjusting unit is specifically configured to:
when the voice message information comprises phone number information, call the user again according to the phone number information; or
when the voice message information comprises time information, call the user again according to the time information; or
when the voice message information comprises information used to indicate that the terminal is unreachable, skip calling the user by using the terminal; or
when the voice message information comprises information about a request for message leaving, play, by a call center, message information recorded by the call center to the terminal or the voice mailbox system when calling the same user again.

6. The voice information processing apparatus according to claim 4, wherein the apparatus further comprises:
a terminating unit, configured to: when the voice information is the voice message information recorded by the user, and it is determined that receiving the voice message information is completed, terminate the voice session established with the terminal, or terminate the voice session that is established with the voice mailbox system by using the terminal.

7. A voice information processing apparatus, wherein the apparatus comprises:
a network interface;
a processor; and
a memory;
wherein the network interface is configured to communicate with a terminal; and
the memory is configured to store an application program, wherein the application program comprises an instruction used to enable the processor to execute the following processes:
sending a call request to the terminal by using the network interface, and establishing a voice session with the terminal or establishing a voice session by using the terminal with a voice mailbox system that provides a voice mailbox service for the terminal;
when voice information sent by the terminal or the voice mailbox system is received by using the network interface, detecting whether the voice information is voice message information recorded by a user; and
if it is detected that the voice information is the voice message information recorded by the user, adjusting, according to reference information when the voice message information comprises the reference information used to call the user, a manner of calling the user.

8. The voice information processing apparatus according to claim 7, wherein the application program may be used to enable the processor to execute the instruction for adjusting, according to the reference information when the voice message information comprises the reference information used to call the user, the manner of calling the user, wherein the instruction is specifically an instruction for executing the following processes:
when the voice message information comprises phone number information, calling the user again according to the phone number information; or
when the voice message information comprises time information, calling the user again according to the time information; or
when the voice message information comprises information used to indicate that the terminal is unreachable, skipping calling the user by using the terminal; or
when the voice message information comprises information about a request for message leaving, playing message information recorded by the apparatus to the terminal or the voice mailbox system when calling the same user again.

9. The voice information processing apparatus according to claim 7, wherein the application program further comprises an instruction that may be used to enable the processor to execute the following process:
when the voice information is the voice message information recorded by the user, and it is determined that receiving the voice message information is completed, terminating the voice session established with the terminal, or terminating the voice session that is established with the voice mailbox system by using the terminal.

10. A voice information processing system, wherein the system comprises the voice information processing apparatus according to any one of claims 4 to 6; or
the system comprises the voice information processing apparatus according to any one of claims 7 to 9.
